# FASCICULE DE BREVET EUROPEEN

(11) **EP 3 393 698 B1**
(45) Date de publication et mention de la délivrance du brevet: **11.12.2019**
(21) Numéro de dépôt: 16820248.9
(22) Date de dépôt: 20.12.2016
(51) Int. Cl.: B22F 3/105, B29C 64/205, B29C 64/153, B33Y 10/00, B33Y 30/00

(54) **MACHINE DE FABRICATION ADDITIVE COMPRENANT UN SYSTÈME DE DISTRIBUTION DE POUDRE À TIROIR ET INJECTEUR**
MASCHINE ZUR GENERATIVEN FERTIGUNG MIT EINEM PULVERVERTEILUNGSSYSTEM MIT EINER SCHALE UND EINEM INJEKTOR
ADDITIVE MANUFACTURING MACHINE COMPRISING A POWDER DISTRIBUTION SYSTEM HAVING A TRAY AND AN INJECTOR

(30) Priorité: 23.12.2015 FR 1563250
(43) Date de publication de la demande: 31.10.2018
(73) Titulaire: Addup, 63118 Cebazat (FR)
(72) Inventeur: WALRAND, Gilles, 63118 Cebazat (FR)
(74) Mandataire: Barascou, Frédéric
(86) Numéro de dépôt international: PCT/EP2016/082039
(87) Numéro de publication internationale: WO 2017/108868

(56) Documents cités:
- WO-A2-2005/097476
- US-A1- 2014 252 687

## Description

L'invention concerne le domaine des machines de fabrication additive, également appelées imprimantes 3D. Plus précisément, l'invention concerne l'injection de poudre dans une telle machine.

Selon une technique connue, une pièce est réalisée par impression dite 3D à partir d'une poudre. La pièce est préalablement décomposée en tranches à l'aide d'un outil CAO. La poudre est ensuite étalée en couches successives sur une surface de travail, chaque couche subissant, avant d'être recouverte par la couche suivante, une étape de fusion et solidification. A cet effet, un apport d'énergie, par exemple par un faisceau laser, permet de dessiner dans la couche de poudre un solide correspondant à la tranche de la pièce à fabriquer. La pièce à fabriquer est généralement supportée par un plateau qui se déplace dans une chambre de fabrication au fur et à mesure que les tranches de la pièce sont fondues et solidifiées pour pouvoir former la couche de poudre suivante. Le plateau définit donc une surface cible, c'est-à-dire une surface dont l'ensemble des points peut être atteint par le faisceau laser, ou tout autre apport d'énergie.

La poudre est généralement mise à disposition sur la surface de travail en suivant une ligne, un dispositif d'étalement, qui est typiquement un rouleau ou une raclette, se déplaçant transversalement à la ligne de poudre et assurant ainsi l'étalement de la poudre.

Le document US 5,597,589 décrit un exemple de réalisation de la technique ci-dessus. Plus précisément, selon cet exemple, une machine de fabrication comprend un distributeur de poudre, en l'occurrence métallique, permettant de distribuer une portion de poudre. Un rouleau permet éventuellement d'étaler la poudre. Un faisceau laser vient fritter de manière sélective une première couche correspondant à une première tranche de la pièce à fabriquer. Le procédé est ensuite répété couche après couche.

La poudre doit être distribuée sur la surface de travail devant le dispositif d'étalement. Par exemple, la poudre est dans un réservoir à partir duquel le dispositif d'étalement récupère devant lui, en se déplaçant, de la poudre, le niveau du réservoir étant remonté par un système de piston au fur et à mesure que le réservoir se vide, comme cela est présenté par exemple dans le document WO 93/08928. Il est également connu de distribuer une ligne de poudre devant le dispositif d'étalement, par exemple au moyen d'un bras de déversement dont la longueur correspond sensiblement à la longueur du dispositif d'étalement, comme dans le document US 5,597,589 précité.

Un problème qui se pose est la gestion de la poudre.

En effet, dans le domaine de l'aéronautique notamment, il est nécessaire d'identifier, pour chaque pièce fabriquée, le lot de poudre qui a servi à sa fabrication. Cette identification permet par exemple, en cas de détection d'un défaut pour un lot de poudre, de repérer les pièces fabriquées avec le lot défectueux. Par conséquent, lorsque le lot de poudre utilisé dans la machine est changé, il faut s'assurer que toute la poudre du lot précédent qui demeure dans la machine, aussi bien dans le circuit d'approvisionnement de la machine que sur les surfaces à l'intérieur de la machine exposées à la poudre, soit retirée avant de mettre en place et d'utiliser le nouveau lot.

Par conséquent, il existe un besoin pour faciliter le nettoyage de la machine entre deux lots de poudre.

En outre, pour une pièce à fabriquer, il est d'usage d'utiliser une quantité de poudre supérieure à la quantité qui sera in fine fondue et solidifiée pour constituer la pièce. Notamment, cet excès de poudre permet de s'assurer que la couche de poudre recouvre de manière adéquate la surface cible. Plus précisément, les couches de poudre sont en général étalées à partir d'une zone de la surface de travail qui est fixe, par exemple à partir du réservoir de poudre ou à partir d'une zone au-dessus de laquelle le bras de déversement se trouve. En outre, les dimensions de cette zone ne sont pas réglables, mais déterminées par la longueur du dispositif d'étalement ou du bras de déversement. Au final, quelles que soient les dimensions et la géométrie de la pièce à fabriquer, l'ensemble de la chambre de fabrication est remplie par la poudre non fondue entourant la pièce. En outre, il est de pratique courante de prévoir de la poudre en excès débordant au-delà de la surface cible pour chaque couche, notamment pour s'assurer que l'ensemble de la surface cible est bien recouverte par la couche de poudre.

Par conséquent, la quantité de poudre immobilisée pour fabriquer une pièce est souvent bien supérieure à la quantité de poudre qui sera au final fondue. Cette immobilisation augmente les coûts de fabrication de la pièce.

Le document WO 2005/097476 propose de remplir une gouttière se déplaçant le long de deux rails, et de remplir la gouttière sur une longueur entre les deux rails adaptée aux dimensions de la pièce à fabriquer. Toutefois, dans cette solution, seul le paramètre concernant la longueur de poudre distribuée entre les deux rails peut être ajusté, limitant les possibilités de gestion de la poudre.

Par conséquent, il existe en outre un besoin pour améliorer la gestion de la poudre pour limiter la quantité de poudre inutile à la fabrication de la pièce en elle-même.

A cet effet, un premier objet de l'invention est de proposer une machine de fabrication additive avec un circuit d'approvisionnement en poudre simplifié, facilitant le nettoyage.

Un deuxième objet de l'invention est de proposer une machine de fabrication additive facilitant l'identification des lots de poudre utilisée.

Un troisième objet de l'invention est de proposer une machine de fabrication additive permettant de doser la quantité de poudre distribuée avec une précision accrue.

Un quatrième objet de l'invention est de proposer une machine de fabrication additive permettant de diminuer le temps de fabrication.

Un cinquième objet de l'invention est de proposer une machine de fabrication additive diminuant le temps de nettoyage de la machine.

Un sixième objet de l'invention est de proposer une machine de fabrication additive diminuant la quantité de poudre polluée par les scories et donc diminuant le coût de recyclage de ladite poudre.

Selon un premier aspect, l'invention propose une machine de fabrication additive d'une pièce par fusion sélective totale ou partielle d'une poudre, comprenant :
- un plan de travail horizontal destiné à recevoir une couche de poudre ;
- au moins un dispositif d'étalement de ladite couche de poudre sur le plan de travail, mobile par rapport au plan de travail selon une trajectoire sur le plan de travail comprenant au moins une composante parallèle à une direction horizontale longitudinale ;
- au moins un système de dépôt de poudre sur le plan de travail comprenant au moins un tiroir de réception de poudre et au moins un injecteur de poudre ;
le tiroir de réception étant mobile en translation par rapport au plan de travail selon au moins une direction horizontale transversale, entre une position rétractée dans laquelle le tiroir de réception s'étend en dehors de la trajectoire du dispositif d'étalement sur le plan de travail et une position déployée dans laquelle le tiroir de réception s'étend au moins en partie dans la trajectoire du dispositif d'étalement sur le plan de travail.

L'injecteur est alors disposé au-dessus du tiroir de réception, de manière à distribuer de la poudre sur le tiroir de réception se déplaçant entre une position rétractée et une position déployée.

La machine peut en outre présenter les caractéristiques suivantes, considérées seules ou en combinaison :
- le système de dépôt est amovible sur la machine, pour pouvoir être retiré de la machine notamment pour être nettoyé et assurer le suivi optimal des lots de poudre ;
- la machine comprend au moins deux systèmes de dépôt de poudre, permettant d'optimiser les déplacements du dispositif d'étalement pour réduire le temps de fabrication et/ou de déposer deux matériaux ;
- la machine comprend un système de régulation de la quantité de poudre distribuée par l'injecteur en tout point de la trajectoire de l'injecteur par rapport au tiroir de réception, permettant notamment d'adapter la quantité de poudre distribuée en fonction de la pièce à fabriquer et de sa position sur le plan de travail ;
- le tiroir de réception comprend une surface de réception destinée à recevoir la poudre de l'injecteur, la surface de réception affleurant le plan de travail lorsque le tiroir de réception est dans une position déployée. A cet effet, par exemple, le tiroir de réception se déplace par rapport au plan de travail dans une rainure s'étendant selon la direction horizontale transversale.

Selon un deuxième aspect, l'invention propose un procédé de fabrication additive d'une pièce par fusion sélective totale ou partielle d'une poudre, mettant en oeuvre la machine telle que présentée ci-dessus. Le procédé comprend notamment les étapes suivantes :
- déterminer la quantité de poudre à distribuer en tout point de la trajectoire de l'injecteur par rapport au tiroir de réception, selon la direction horizontale transversale ;
- déplacer le tiroir de réception d'une position rétractée dans une position déployée ;
- réguler la quantité de poudre distribuée par l'injecteur en tout point de la trajectoire de l'injecteur par rapport au tiroir de réception ;
- étaler la poudre sur le plan de travail au moyen du dispositif d'étalement.

Selon un mode de réalisation, dans lequel le tiroir de réception se déplace par rapport au plan de travail dans la rainure s'étendant selon la direction horizontale transversale, le procédé peut en outre comprendre les étapes suivantes :
- collecter la poudre en excès qui n'a pas été étalée ;
- recevoir la poudre en excès dans la rainure.

D'autres caractéristiques et avantages de l'invention apparaîtront à la lumière de la description d'exemples de réalisation de l'invention, accompagnée des figures dans lesquelles :
La figure 1 est une représentation schématique tridimensionnelle d'un plan de travail à l'intérieur d'une machine de fabrication additive comprenant un système de distribution de poudre selon un exemple de réalisation.
Les figures 2 à 4 sont des représentations schématiques vues en coupe d'un système de distribution de poudre selon un autre exemple de réalisation, respectivement dans trois positions différentes.
Les figures 5 et 6 sont des représentations schématiques simplifiées d'une variante du système de distribution de poudre des figures 2 à 4.
La figure 7 est une représentation schématique en vue de dessus du plan de travail de la figure 1 selon un premier exemple de mise en oeuvre.
La figure 8 est un graphe illustrant le profil de la distribution de poudre de la figure 7.
La figure 9 est une représentation schématique en vue de dessus du plan de travail de la figure 1 selon un deuxième exemple de mise en oeuvre.
La figure 10 est un graphe illustrant le profil de la distribution de poudre de la figure 9.

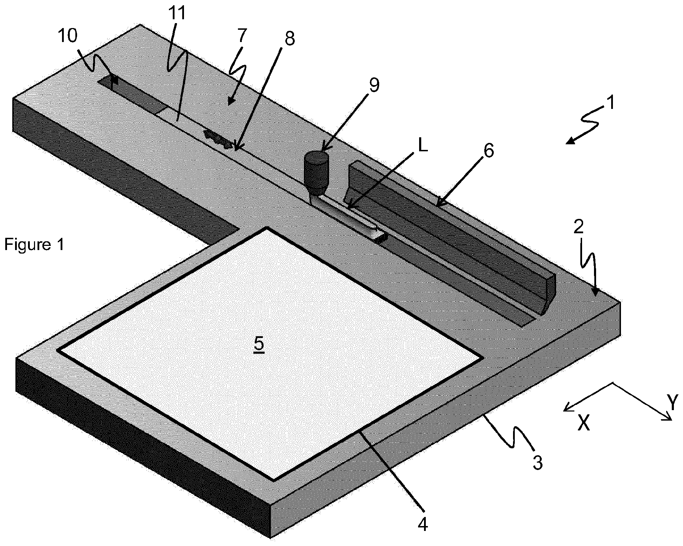

Sur la figure 1, il est représenté de manière schématique et partielle l'intérieur d'une machine 1 de fabrication additive d'une pièce par fusion sélective totale ou partielle, à partir d'un matériau en poudre. Le matériau utilisé peut être par exemple métallique ou plastique. Plus précisément, sur la figure 1, il est représenté un plan **2** de travail correspondant au fond d'une enceinte à l'intérieur de la machine 1. De préférence, l'atmosphère à l'intérieur de l'enceinte est rendue inerte vis-à-vis du matériau utilisé.

A des fins de clarté et de simplification, le plan 2 de travail est considéré ici comme étant horizontal. Il est alors défini un axe **X** horizontal longitudinal et un axe **Y** horizontal transversal, parallèles à la surface 2 de travail et orthogonaux entre eux. L'adjectif « longitudinal » et ses variantes désignent alors dans ce qui suit toute direction parallèle à l'axe X longitudinal, de même, l'adjectif « transversal » et ses variantes désignent toute direction parallèle à l'axe Y transversal.

Plus précisément, le plan 2 de travail est formé sur la surface supérieure d'une plaque 3 de fond, constituant le fond de l'enceinte de la machine 1.

La machine 1 comprend une chemise, non représentée sur les figures, s'étendant sous le plan 2 de travail selon un axe vertical, et ouverte dans l'enceinte. A cet effet, la plaque 3 comprend une ouverture **4**, la chemise étant mise en coïncidence avec cette ouverture. La chemise sert en général de guidage à un plateau support de pièce, non représenté non plus, sur lequel repose la pièce en cours de fabrication. Le plateau descend verticalement dans la chemise au fur et à mesure que les tranches de pièces sont formées par fusion et solidification de la poudre des couches correspondantes, de sorte qu'une couche de poudre de hauteur déterminée sur le plateau dépasse du plan 2 de travail par l'ouverture 4. L'ouverture 4 de la plaque 3 de fond délimite alors une surface 5 cible, c'est-à-dire la surface dans laquelle de la poudre est susceptible d'être fondue pour former la pièce à fabriquer. En d'autres termes, la surface 5 cible représente l'ensemble des points susceptibles d'être atteints par exemple par un faisceau laser pour fondre la poudre et fabriquer la pièce. En général, la surface supérieure du plateau support de pièce est parallèle au plan 2 de travail. Ainsi, pour la première couche de poudre, la surface 5 cible correspond à la surface supérieure du plateau support de pièce.

La machine 1 comprend par ailleurs un système de fusion, non représenté, permettant à la poudre de fondre puis de se solidifier. Il s'agit par exemple d'un laser envoyant un faisceau sur la surface 5 cible pour fusionner au moins en partie la poudre.

La machine 1 comprend en outre un dispositif **6** d'étalement d'une couche de poudre, monté mobile dans l'enceinte par rapport au plan 2 de travail suivant au moins l'axe X longitudinal. Dans les exemples présentés ici, le dispositif 6 d'étalement est de type raclette. Toutefois, le dispositif 6 d'étalement pourra être de tout type, par exemple rouleau. Le dispositif 6 d'étalement peut se déplacer longitudinalement d'une course maximale entre une position extrême initiale située d'un côté de la surface 5 cible et une position extrême finale située de l'autre côté de la surface 5 cible. Dans ce qui suit, il est défini une trajectoire du dispositif 6 d'étalement sur le plan 2 de travail comme étant l'ensemble des trajectoires de l'ensemble des points du dispositif 6 d'étalement sur le plan 2 de travail.

La machine comprend par ailleurs un système **7** de distribution de poudre sur le plan 2 de travail. Le système 7 de dépôt comprend un tiroir **8** de réception de poudre et un injecteur **9** de poudre.

Par injecteur, on désigne ici un injecteur dont les dimensions de l'orifice de sortie de la poudre sont très inférieures aux dimensions du plan 2 de travail et de sa surface 5 cible. L'injecteur 9 peut alors être qualifié de ponctuel.

Le tiroir 8 est mobile en translation par rapport au plan 2 de travail selon au moins une direction transversale, par exemple dans une rainure **10.** Plus précisément, la rainure 10 est pratiquée dans la plaque 3 de fond, et s'ouvre sur le plan 2 de travail, entre le dispositif 6 d'étalement dans sa position extrême initiale et la surface 5 cible. La distance transversale de la rainure 10 est suffisante pour s'étendre totalement dans la trajectoire du dispositif 6 d'étalement dans le plan 2 de travail et au-delà d'au moins un côté, transversalement.

Le tiroir 8 de réception est monté glissant transversalement par rapport au plan 2 de travail, par exemple dans la rainure 10, entre deux positions, lorsque vu dans un plan horizontal :
- une position rétractée dans laquelle le tiroir 8 de réception s'étend en dehors de la trajectoire du dispositif 6 d'étalement sur le plan 2 de travail ;
- une position déployée dans laquelle le tiroir 8 de réception s'étend au moins en partie dans la trajectoire du dispositif 6 d'étalement sur le plan 2 de travail.

On comprend qu'il n'y a pas une seule position déployée, mais une multitude, le tiroir 8 dans une position déployée ne s'étendant pas nécessairement entièrement dans la trajectoire du dispositif 6 d'étalement sur le plan 2 de travail.

De même, il peut ne pas avoir une unique position rétractée, mais une multitude de positions rétractées dans lesquelles le tiroir 8 n'est plus dans la trajectoire du dispositif 6 d'étalement.

Plus précisément encore, le tiroir 8 de réception comprend une surface **11** supérieure formant surface de réception pour la poudre. La surface 11 de réception affleure le plan 2 de travail, de manière à former une continuité avec le plan 2 de travail, lorsque le tiroir 8 de réception est en position déployée. Ainsi, lorsque le tiroir 8 est en position déployée, la surface 11 de réception est sur la trajectoire du dispositif 6 d'étalement, c'est-à-dire que le dispositif 6 d'étalement se déplaçant longitudinalement passe sur la surface 11 de réception.

L'injecteur 9 de poudre est disposé au-dessus du tiroir 8 de réception, de manière à distribuer de la poudre sur la surface 11 de réception lorsque le tiroir 8 se déplace entre la position rétractée et une position déployée. Plus précisément, l'injecteur 9 est fixe par rapport à la plaque 3 de fond, et donc par rapport au plan 2 de travail, selon au moins la direction transversale. Le tiroir 8 de réception se déplace alors transversalement par rapport au plan 2 de travail, et donc par rapport à l'injecteur 9, ce dernier distribuant une ligne L de poudre sur la surface 11 supérieure du tiroir 8.

Ainsi, lorsque le tiroir 8 de réception est dans une position déployée, l'injecteur 9 ayant distribué sur sa surface 11 de réception de la poudre, le déplacement longitudinal du dispositif 6 d'étalement permet d'étaler de la poudre à partir du tiroir 8 de réception sur au moins une partie de la surface 5 cible.

Selon un mode de réalisation, l'injecteur 9 est totalement fixe par rapport au plan 2 de travail, simplifiant la conception du système 7 de distribution.

En variante, l'injecteur 9 peut être mobile en translation suivant l'axe Z vertical par rapport au plan 2 de travail, comme cela sera explicité plus loin.

Le système 7 de distribution de poudre comprenant le tiroir 8 de réception et l'injecteur 9 se révèle particulièrement avantageux lorsqu'il faut changer de lot de poudre. En effet, l'injecteur 9 étant fixe par rapport au plan 2 de travail, il peut être connecté de manière simple et directe à un réservoir de poudre, par exemple au moyen d'un simple conduit directement connecté d'une part sur le réservoir et d'autre part sur l'injecteur 9. Ainsi, le circuit de distribution de poudre comprend un nombre restreint de pièces. Le système 7 de distribution de poudre peut être retiré de l'enceinte à l'intérieur de la machine 1 et remplacé par un nouveau système exempt de tout résidu de poudre. Un nouveau conduit, également exempt de tout résidu de poudre, est mis en place pour connecter le nouveau système 7 de distribution à un réservoir comprenant la poudre du nouveau lot.

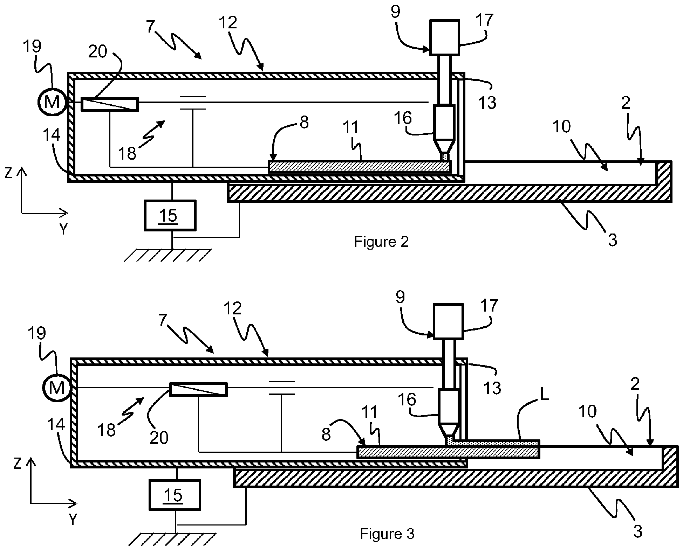

Sur les figures 2 à 4, il est illustré un exemple de réalisation du système 7 de distribution particulièrement destiné à faciliter son retrait et son remplacement.

Selon cet exemple, le système 7 de distribution comprend un fourreau **12**, fixé de manière amovible au bâti de la machine 1. Le fourreau 12 est par exemple de forme cylindrique, d'axe sensiblement transversal, ouvert à une extrémité **13** proximale et fermé à une extrémité **14** distale, les adjectifs « distal » et « proximal » devant être compris ici en référence au dispositif 6 d'étalement. Le fourreau 12 est fixé au bâti au moyen d'un système **15** de verrouillage, actionnable entre une position verrouillée fixant de manière rigide le fourreau 12 au bâti de la machine 1 et une position déverrouillée permettant le retrait du fourreau 12 et sa mise en place sur le bâti de la machine 1. Par exemple, le système 15 de verrouillage connecte le fourreau 12 à la plaque 3 de fond.

La rainure 10 s'étend selon cet exemple dans la continuité du fourreau 12, à partir de l'extrémité 13 distale.

Selon cet exemple, l'injecteur 9 comprend une tête **16** dont la sortie est à l'intérieur du fourreau 12, et un connecteur **17** disponible à l'extérieur du fourreau 12 pour être raccordé à un réservoir de poudre, non représenté. Par exemple, un raccord de type flexible peut avantageusement être assemblé d'une part sur une sortie du réservoir de poudre et d'autre part au connecteur 17 de l'injecteur 9 pour raccorder directement l'injecteur 9 au réservoir. Eventuellement, une trémie de dosage peut être interposée entre le réservoir et le connecteur 17 de l'injecteur 9.

Le tiroir 8 de réception est monté en translation suivant l'axe Y transversal sur le fourreau 12 au moyen d'un système **18** d'actionnement. Le système 18 d'actionnement comprend par exemple un moteur **19** permettant de déplacer en translation transversale le tiroir 8 au moyen d'un dispositif **20** à vis sans fin. De préférence, mais non nécessairement, le moteur 19 ne doit pas être en contact avec la poudre pour éviter toute contamination. Par exemple, le moteur 19 est alors placé à l'extérieur du fourreau 12, ou dans un compartiment séparé à l'intérieur du fourreau 12.

Le système 18 d'actionnement permet alors de déplacer le tiroir 8 entre une position rétractée et une position déployée. Plus précisément, selon l'exemple des figures 2 à 4, lorsque le tiroir 8 est dans une position rétractée dite finale, il est entièrement contenu à l'intérieur du fourreau 12, pour des raisons qui seront explicitées plus loin.

Il va maintenant être décrit un exemple de mise en oeuvre de la machine comprenant le système 7 de distribution de poudre des figures 2 à 4.

A partir de la position rétractée finale (figure 2), le moteur 19 du système 18 d'actionnement est mis en route, de manière à provoquer le déplacement transversal contrôlé du tiroir 8 de l'extrémité 14 distale en direction de l'extrémité 13 proximale. En particulier, la vitesse de déplacement du tiroir 8 est contrôlée. Concomitamment, l'injecteur 9 est ouvert, de manière à distribuer de la poudre sur la surface 11 de réception du tiroir 8.

Le tiroir 8 est ainsi déplacé et sort du fourreau 12 par l'extrémité 13 proximale ouverte (figure 3), l'injecteur 9 déposant sur la surface 11 de réception une ligne L de poudre. Le tiroir 8 est alors à cheval entre l'intérieur du fourreau 12 et la rainure 10.

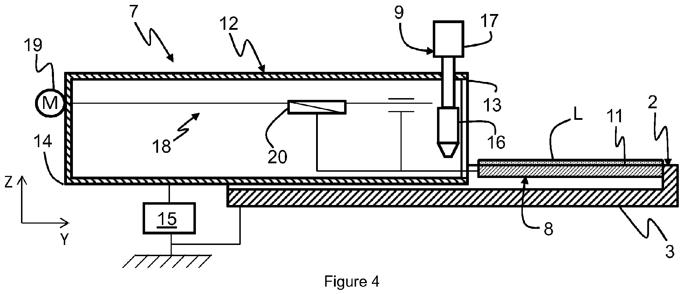

Le moteur 19 continue à provoquer le déplacement du tiroir 8 hors du fourreau 12, et le tiroir 8 se trouve alors dans une position déployée (figure 4), dans laquelle il est par exemple entièrement sorti du fourreau 12. La totalité de sa surface 11 de réception, qui peut alors être, mais non nécessairement, totalement recouverte par la ligne L de poudre, est ainsi placée sur la trajectoire du dispositif 6 d'étalement.

Une fois que le dispositif 6 d'étalement est passé sur la ligne L de poudre pour l'étaler et former la couche au moins en partie sur la surface 5 cible, le tiroir 8 est de nouveau déplacé par le système 18 d'actionnement dans la position rétractée finale, dans laquelle le tiroir 8 est entièrement compris à l'intérieur du fourreau 12.

Lorsque le lot de poudre doit être changé, le système 15 de verrouillage est placé dans la position déverrouillée, et le connecteur 17 de l'injecteur 9 est désassemblé du raccord flexible. Le fourreau 12 contenant l'ensemble du système 7 de distribution de poudre peut alors être retiré de la machine 1 pour être nettoyé des restes de poudre avant d'être de nouveau placé dans la machine 1. Un nouveau lot de poudre est alors mis en place dans un réservoir propre, et un raccord flexible propre est de nouveau solidarisé d'une part à la sortie du réservoir et d'autre part au connecteur 17 de l'injecteur 9.

Le fourreau 12 peut être placé sur la machine de telle manière que l'ouverture 13 proximale s'ouvre à l'intérieur de l'enceinte à l'atmosphère inerte de la machine, et que le reste du fourreau 12, notamment le connecteur 17 de l'injecteur qui n'a pas besoin d'être dans une atmosphère inerte, soit à l'extérieur de l'enceinte. Ainsi, le fourreau 12 est accessible à l'extérieur de l'enceinte, facilitant le raccord au réservoir, le retrait et le remplacement du système 7 de distribution.

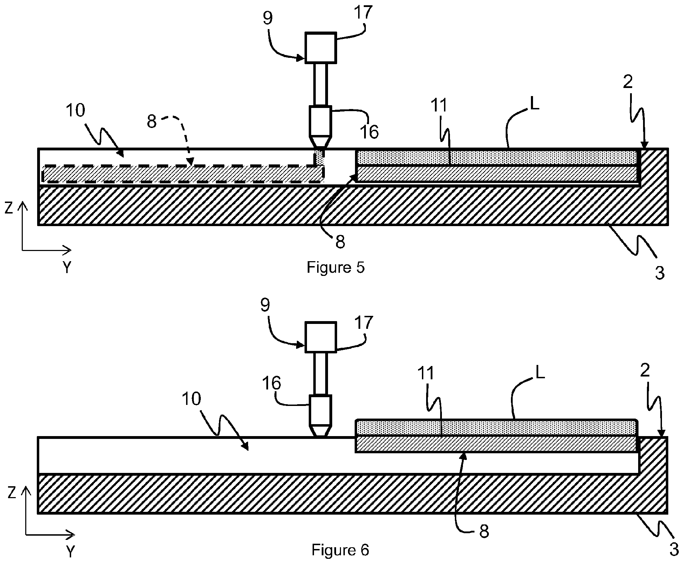

Selon un autre mode de réalisation, le tiroir 8 de réception peut, en plus d'être mobile transversalement, être mobile verticalement par rapport au plan 2 de travail. Cette variante est illustrée notamment sur les figures 5 et 6, sur lesquelles le système 7 de distribution a été représenté de manière simplifiée, en omettant le fourreau 12 et le système 18 d'actionnement. Selon cet autre mode de réalisation, l'injecteur 9 est positionné verticalement au-dessus de la surface 11 de réception du tiroir 8 de manière à ce que son orifice de sortie de poudre soit à la même hauteur que le plan 2 de travail. En d'autres termes, la distance mesurée verticalement entre l'orifice de sortie de l'injecteur 9 et le plan 2 de travail est quasiment nulle. Le diamètre de l'orifice de sortie de l'injecteur 9 est adapté pour que la poudre qui en sort ne soit distribuée que sur la surface 11 de réception, et non sur le plan 2 de travail entourant la rainure 10. Le tiroir 8 est, dans la position rétractée, abaissé dans la rainure 10, à proximité du fond de la rainure, de sorte que la surface 11 de réception soit à l'intérieur de la rainure 10. La distance initiale entre la surface 11 de réception du tiroir 8 en position rétractée et le plan 2 de travail est connue et ajustée par déplacement vertical du tiroir 8 dans la rainure 10. Comme précédemment, le tiroir 8 est déplacé en translation transversale dans la rainure 10 depuis une position rétractée, en traits discontinus sur la figure 5, vers une position déployée, en traits pleins sur la figure 5, dans laquelle la surface 11 de réception n'affleure pas le plan 2 de travail. L'injecteur 9 ayant distribué de la poudre sur la surface 11 de réception, le volume de poudre distribuée est contrôlé et connu avec une précision accrue. En effet, l'injecteur 9 est disposé à une hauteur par rapport au plan 2 de travail telle que la hauteur de la ligne de poudre formée sur la surface 11 de réception correspond à la distance, connue et contrôlée entre la surface 11 de réception et le plan 2 de travail. Dès lors, connaissant la dimension longitudinale de la rainure 10 et en contrôlant la dimension transversale de la ligne L de poudre distribuée par l'injecteur 9 sur la surface 11 de réception du tiroir, le volume de la ligne L de poudre distribuée par l'injecteur 9 est connu. Le tiroir 8 peut alors être déplacé verticalement rendant la ligne L de poudre accessible pour être étalée par le dispositif 6 d'étalement. La ligne L de poudre peut être rendue accessible au dispositif 6 d'étalement complètement, auquel cas le tiroir 8 est déplacé verticalement jusqu'à ce que la surface 11 de réception affleure le plan 2 de travail, ou partiellement, d'un volume déterminé en déplaçant le tiroir 8 verticalement d'une hauteur déterminée.

En variante de cet autre mode de réalisation, l'injecteur 9 peut être à une distance verticale du plan 2 de travail qui n'est pas nulle. Le tiroir 8 abaissé dans la rainure permet alors d'exercer un contrôle sur l'étalement de la ligne L de poudre distribuée par l'injecteur 9, l'étalement étant limité longitudinalement par la rainure 10 tant que la quantité de poudre déposée reste inférieure à celle que peut contenir la rainure.

La machine 1 peut en outre comprendre un système de nettoyage du tiroir 8, et plus précisément de sa surface 11 de réception, entre chaque ligne L de poudre à former, pour s'assurer que la quantité de poudre distribuée par l'injecteur 9 à chaque ligne est connue avec précision. Par exemple, le système de nettoyage peut être un système d'aspiration dans la rainure 10, ou une lame formant raclette, disposée par exemple à l'extrémité 13 proximale du fourreau 12 du mode de réalisation présenté ci-dessus. La lame est conçue de sorte qu'elle n'agit pas sur la ligne L de poudre lorsque le tiroir 8 se déplace d'une position rétractée vers une position déployée, mais uniquement lorsque le tiroir 8 se déplace vers la position rétractée, de manière à nettoyer la surface 11 de réception des éventuels restes de poudre et de scories, c'est-à-dire les morceaux indésirables de poudre agglomérée, et de présenter la surface 11 de réception propre pour une nouvelle ligne de poudre. Les restes de poudre tombent alors dans la rainure 10, et un dispositif annexe, par exemple d'aspiration ou de vibrations, permet d'évacuer les restes de poudre en dehors de la rainure 10.

Le système 7 de distribution de poudre peut permettre en outre de contrôler et d'ajuster avec une précision accrue la quantité de poudre distribuée sur le plan 2 de travail.

A cet effet, le système 7 de distribution peut comprendre un dispositif de régulation de la quantité de poudre distribuée par l'injecteur 9 sur le tiroir 8 en tout point de la trajectoire de l'injecteur 9 par rapport au tiroir 8, c'est-à-dire en tout point selon une direction transversale de la ligne L de poudre sur la surface 11 de réception.

Le dispositif de régulation permet de réguler la quantité de poudre distribuée sur le tiroir 8 par exemple en contrôlant et en adaptant à tout instant la vitesse de déplacement du tiroir 8 et/ou le débit de l'injecteur 9. Selon un mode de réalisation, l'injecteur 9 est mobile par rapport au plan 2 de travail, et donc par rapport au tiroir 8, selon la direction verticale. Plus précisément, la distance verticale entre l'orifice de sortie de l'injecteur 9 et la surface 11 de réception du tiroir 8 est réglable. Le dispositif de régulation agit alors sur le réglage de la hauteur de l'injecteur 9. En effet, dans ce mode de réalisation, la poudre tombe de l'injecteur 9 sensiblement par gravité. La poudre distribuée sur la surface 11 de réception prend la forme d'un talus reliant la surface 11 de réception et l'orifice de sortie de l'injecteur 9. Lorsque le talus de poudre obstrue l'orifice de sortie de l'injecteur 9 par lequel s'écoule la poudre, il n'y a plus d'écoulement de poudre. De plus, lorsque l'injecteur 9 est en contact avec la surface 11 de réception, celle-ci obstrue l'orifice de sortie de l'injecteur 9 par lequel s'écoule la poudre, il n'y a pas d'écoulement de poudre. On comprend que les dimensions de l'orifice de sortie de l'injecteur 9 sont adaptées pour que la surface 11 de réception et le talus de poudre réalisent cette obstruction. Ainsi, la variation de la hauteur de l'injecteur 9 permet de varier le débit de poudre en sortie de l'injecteur 9.

Ainsi, sur une même ligne L de poudre sur le tiroir 8, la quantité de poudre peut être variée.

Par exemple, il peut être souhaitable de distribuer une quantité de poudre plus importante aux extrémités transversales de la ligne L de poudre qu'ailleurs, afin de limiter le phénomène dit de langue. En effet, lors du passage du dispositif d'étalement, la poudre située aux extrémités transversales sur la trajectoire du dispositif 6 d'étalement a tendance à être éjectée vers les côtés, de sorte que les bords longitudinaux de la couche de poudre sur le plan 2 de travail ne sont pas rectilignes.

Dès lors, grâce au système 7 de distribution de poudre, en régulant la quantité de poudre distribuée par l'injecteur 9 lors du déplacement du tiroir 8 d'une position rétractée vers une position déployée, la quantité de poudre présentée sur la trajectoire du dispositif 6 d'étalement est ajustée en conséquence.

Grâce au dispositif de régulation, la machine peut alors, en variante ou en combinaison du système de nettoyage du tiroir 8, comprendre un système de vérification de la quantité de poudre restante sur la surface 11 de réception du tiroir 8, après passage du dispositif 6 d'étalement. Par exemple, le système de vérification peut consister en un capteur de hauteur de poudre restante sur la surface 11 de réception. Le dispositif de régulation peut ainsi ajuster la quantité de poudre distribuée sur la surface 11 de réception en fonction de la quantité restante pour atteindre la quantité déterminée, et ce en tout point de la trajectoire de l'injecteur 9. En variante, la machine peut comprendre un système de vérification de la quantité de poudre déposée sur la surface 11 de réception permettant de contrôler en boucle fermée le débit de poudre délivré par l'injecteur.

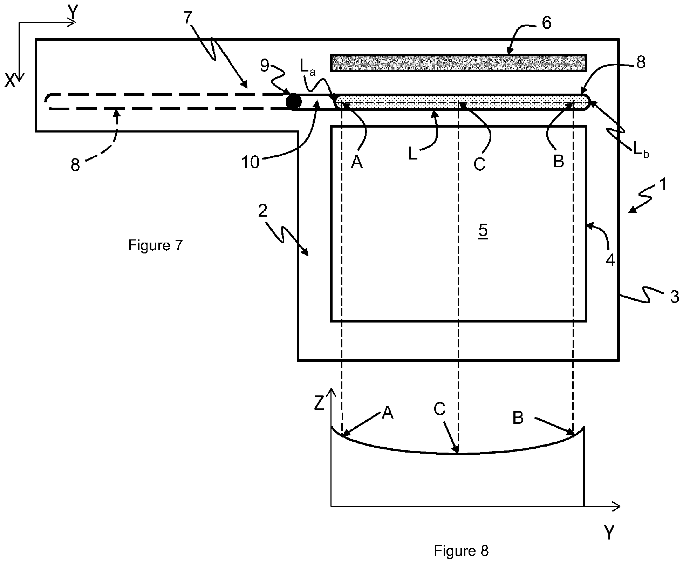

Sur les figures 7 et 8, il a été représenté de manière schématique un exemple de mise en oeuvre du système 7 de distribution de la figure 1 notamment pour minimiser l'effet de langue. Ainsi, une ligne L de poudre a été distribuée sur le tiroir 8 déplacé depuis une position rétractée, en traits discontinus sur la figure 7, vers une position déployée, en trait plein sur la figure 7, par translation dans la rainure 10. Une ligne L de poudre est alors distribuée sur l'ensemble de la surface 11 de réception par l'injecteur 9 au fur et à mesure que le tiroir 8 se déplace. Aux extrémités transversales **Lₐ** et **L_{b}** de la ligne L de poudre, la quantité de poudre distribuée sur le tiroir 8 est plus importante qu'ailleurs. Par exemple, la quantité de poudre est régulée en déplaçant verticalement l'injecteur 9 de poudre le long de sa trajectoire par rapport au tiroir 8. Ainsi, en considérant deux points respectivement A et B à proximité des extrémités transversales respectivement Lₐ et L_{b} de la ligne L de poudre, et considérant un troisième point C situé sensiblement au milieu de la ligne L de poudre, les trois points A, B et C étant alignés transversalement, la hauteur de poudre aux points A et B est plus importante qu'au point C, le profil de la hauteur de poudre en fonction de la position transversale sur la ligne L de poudre étant alors par exemple parabolique.

Le système 7 de distribution de poudre peut en outre permettre d'adapter la quantité de poudre à la forme, à la géométrie et/ou à la position de la tranche T à fondre et solidifier de la pièce à fabriquer sur la surface 5 cible.

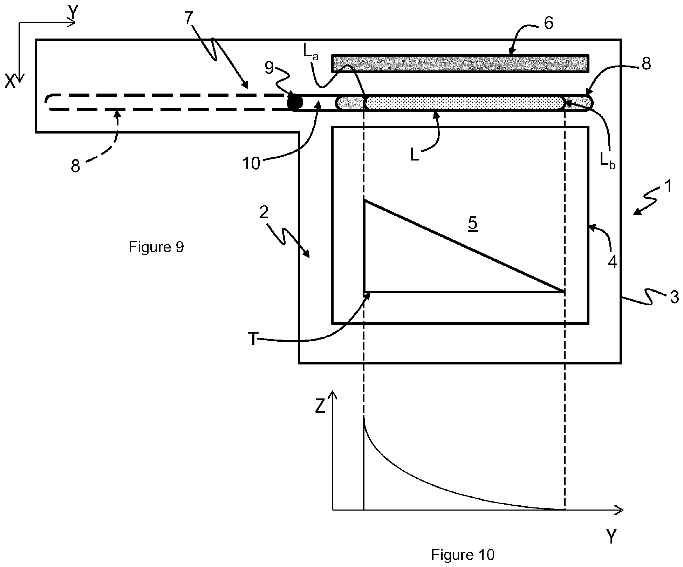

Sur les figures 9 et 10, il a été représenté de manière schématique un exemple de mise en oeuvre du système 7 de distribution dans lequel la tranche T à fondre et solidifier a une dimension transversale inférieure à la dimension transversale de la surface 5 cible, et présente un bord incliné transversalement. Par conséquent, il n'est pas nécessaire que la couche de poudre recouvre l'ensemble de la surface 5 cible ni que la même quantité de poudre soit étalée suivant la direction transversale. Ainsi, le système 7 de distribution de poudre est mis en oeuvre pour réguler la quantité de poudre distribuée par l'injecteur 9 sur le tiroir 8 de sorte que la ligne L de poudre distribuée ne recouvre pas la totalité de la surface 11 de réception du tiroir 8, mais a sa dimension transversale adaptée à la dimension transversale de la tranche T. En outre, les extrémités Lₐ et L_{b} de la ligne L de poudre sont également positionnées de manière à correspondre aux extrémités transversales de la tranche T à fondre et solidifier lorsque le tiroir 8 est dans une position déployée. Enfin, le système 7 de distribution de poudre a régulé transversalement la quantité de poudre distribuée par l'injecteur 9 sur le tiroir 8 de manière à s'adapter à la géométrie de la tranche T, la quantité de poudre à l'extrémité transversale L_{b} étant inférieure à la quantité de poudre à l'extrémité Lₐ de la ligne L de poudre. Le profil de la hauteur de poudre en fonction de la position transversale sur la ligne L de poudre est alors par exemple décroissant de l'extrémité Lₐ vers l'extrémité L_{b}.

En variante, la machine 1 peut comprendre deux systèmes 7 de distribution de poudre, par exemple disposés de part et d'autre de la surface 5 cible selon la direction longitudinale. Ainsi, lorsque le dispositif 6 d'étalement partant d'une première position extrême initiale étale une première couche de poudre sur la surface 5 cible jusqu'à une position extrême finale, il peut repartir de cette position extrême finale comme deuxième position extrême initiale pour étaler la couche de poudre suivante. Les déplacements du dispositif 6 d'étalement sont minimisés, puisqu'il n'est plus nécessaire de le ramener à une même position extrême initiale à chaque nouvelle couche.

Selon cette variante, les rainures 10 dans la plaque 3 de fond peuvent être utilisées avec un système d'évacuation de la poudre en excès. En effet, en partant de la ligne L de poudre d'un premier système 7 de distribution de poudre, le dispositif 6 d'étalement étale une couche de poudre et sa course longitudinale est réglée pour l'emmener au-delà de la rainure 10 du deuxième système 7 de distribution de poudre. La poudre en excès qui n'a pas été étalée peut alors être récupérée en tombant dans la rainure 10 du deuxième système 7 de distribution de poudre. Le système d'évacuation peut être mis en oeuvre pour que la poudre tombée dans la rainure 10 soit évacuée, et éventuellement recyclée pour être de nouveau injectée. La rainure 10 de l'autre système 7 de distribution de poudre pourra de manière similaire être reliée à un système d'évacuation de poudre.

Le système d'évacuation peut par exemple comprendre un élément de ramassage disposé sous le tiroir 8 de réception, à l'opposé de la surface 11 de réception. Ainsi, lorsque le tiroir 8 de réception se déplace dans la rainure 10 correspondante, l'élément de ramassage évacue la poudre tombée dans la rainure. Par exemple, l'élément de ramassage peut être adapté pour évacuer la poudre de la rainure lorsque le tiroir 8 se déplace d'une position déployée vers une position rétractée. En effet, la poudre sort ainsi du même côté que celui où se trouve le tiroir 8 en position rétractée, de sorte qu'un emplacement de ce côté pour un réservoir de récupération de la poudre en excès, ou pour tout élément du système d'évacuation, peut facilement être prévu.

La machine peut également comprendre deux dispositifs 6 d'étalement, chacun affecté à un système 7 de distribution de poudre, et étalant chacun une partie de la couche de poudre sur la surface 5 cible.

Chaque système 7 de distribution de poudre peut être utilisé avec une poudre d'un même matériau ou d'un matériau différent.

## Revendications

1. Machine (**1**) de fabrication additive d'une pièce par fusion sélective totale ou partielle d'une poudre, comprenant :
- un plan (**2**) de travail horizontal destiné à recevoir une couche de poudre ;
- au moins un dispositif (**6**) d'étalement de ladite couche de poudre sur le plan (**2**) de travail, mobile par rapport au plan (**2**) de travail selon une trajectoire sur le plan (**2**) de travail comprenant au moins une composante parallèle à une direction horizontale longitudinale ;
- au moins un système (**7**) de dépôt de poudre sur le plan (**2**) de travail comprenant au moins un tiroir (**8**) de réception de poudre et au moins un injecteur (**9**) de poudre ;
le tiroir (**8**) de réception étant mobile en translation par rapport au plan (**2**) de travail selon au moins une direction horizontale transversale, entre une position rétractée dans laquelle le tiroir (**8**) de réception s'étend en dehors de la trajectoire du dispositif (**6**) d'étalement sur le plan (**2**) de travail et une position déployée dans laquelle le tiroir (**8**) de réception s'étend au moins en partie dans la trajectoire du dispositif (**6**) d'étalement sur le plan (**2**) de travail,
l'injecteur (**9**) étant disposé au-dessus du tiroir (**8**) de réception, de manière à distribuer de la poudre sur le tiroir (**8**) de réception se déplaçant entre une position rétractée et une position déployée.

2. Machine (**1**) de fabrication additive selon la revendication 1, dans laquelle le système (**7**) de dépôt est amovible sur la machine (**1**).

3. Machine (**1**) de fabrication additive selon la revendication 1 ou la revendication 2, comprenant au moins deux systèmes (**7**) de dépôt de poudre.

4. Machine (**1**) de fabrication additive selon l'une quelconque des revendications précédentes, comprenant un système de régulation de la quantité de poudre distribuée par l'injecteur (**9**) en tout point de la trajectoire de l'injecteur (**9**) par rapport au tiroir (**8**) de réception.

5. Machine (**1**) de fabrication additive selon l'une quelconque des revendications précédentes, dans laquelle le tiroir (**8**) de réception comprend une surface (**11**) de réception destinée à recevoir la poudre de l'injecteur (**9**), la surface (**11**) de réception affleurant le plan (**2**) de travail lorsque le tiroir (**8**) de réception est dans une position déployée.

6. Machine (**1**) de fabrication additive selon la revendication 4, dans laquelle le tiroir (**8**) de réception se déplace par rapport au plan (**2**) de travail dans une rainure (**10**) s'étendant selon la direction horizontale transversale.

7. Procédé de fabrication additive d'une pièce par fusion sélective totale ou partielle d'une poudre, mettant en oeuvre la machine (**1**) selon l'une quelconque des revendications précédentes, ledit procédé comprenant les étapes suivantes :
- déterminer la quantité de poudre à distribuer en tout point de la trajectoire de l'injecteur (**9**) par rapport au tiroir (**8**) de réception, selon la direction horizontale transversale ;
- déplacer le tiroir (**8**) de réception d'une position rétractée dans une position déployée ;
- réguler la quantité de poudre distribuée par l'injecteur (**9**) en tout point de la trajectoire de l'injecteur (**9**) par rapport au tiroir (**8**) de réception ;
- étaler la poudre sur le plan (**2**) de travail au moyen du dispositif (**6**) d'étalement.

8. Procédé de fabrication additive selon la revendication 7, mettant en oeuvre la machine (**1**) selon la revendication 6, comprenant les étapes suivantes, après l'étape d'étalement de la poudre sur le pan (**2**) de travail :
- collecter la poudre en excès qui n'a pas été étalée ;
- recevoir la poudre en excès dans une rainure (**10**) ;
- évacuer la poudre en excès.

## Patentansprüche

1. Maschine (1) zur additiven Fertigung eines Teils durch vollständiges oder teilweises selektives Schmelzen eines Pulvers, welche umfasst:
- eine horizontale Arbeitsebene (2), die dazu bestimmt ist, eine Pulverschicht aufzunehmen;
- wenigstens eine Vorrichtung (6) zum Ausbreiten der Pulverschicht auf der Arbeitsebene (2), die in Bezug auf die Arbeitsebene (2) entlang einer Trajektorie auf der Arbeitsebene (2) beweglich ist, die wenigstens eine zu einer horizontalen Längsrichtung parallele Komponente umfasst;
- wenigstens ein System (7) zur Aufbringung von Pulver auf die Arbeitsebene (2), welches wenigstens einen Schieber (8) zur Aufnahme von Pulver und wenigstens einen Pulverinjektor (9) umfasst;
wobei der Aufnahmeschieber (8) in Bezug auf die Arbeitsebene (2) in wenigstens einer horizontalen Querrichtung translatorisch bewegbar ist zwischen einer zurückgezogenen Position, in welcher sich der Aufnahmeschieber (8) außerhalb der Trajektorie der Ausbreitungsvorrichtung (6) auf der Arbeitsebene (2) erstreckt, und einer ausgefahrenen Position, in welcher sich der Aufnahmeschieber (8) wenigstens teilweise in der Trajektorie der Ausbreitungsvorrichtung (6) auf der Arbeitsebene (2) erstreckt,
wobei der Injektor (9) oberhalb des Aufnahmeschiebers (8) derart angeordnet ist, dass er Pulver auf dem sich zwischen einer zurückgezogenen Position und einer ausgefahrenen Position bewegenden Aufnahmeschieber (8) verteilt.

2. Maschine (1) zur additiven Fertigung nach Anspruch 1, wobei das System (7) zur Aufbringung lösbar an der Maschine (1) angebracht ist.

3. Maschine (1) zur additiven Fertigung nach Anspruch 1 oder Anspruch 2, welche wenigstens zwei Systeme (7) zur Aufbringung von Pulver umfasst.

4. Maschine (1) zur additiven Fertigung nach einem der vorhergehenden Ansprüche, welche ein System zur Regulierung der Pulvermenge umfasst, die von dem Injektor (9) in jedem Punkt der Trajektorie des Injektors (9) in Bezug auf den Aufnahmeschieber (8) verteilt wird.

5. Maschine (1) zur additiven Fertigung nach einem der vorhergehenden Ansprüche, wobei der Aufnahmeschieber (8) eine Aufnahmefläche (11) umfasst, die dazu bestimmt ist, das Pulver des Injektors (9) aufzunehmen, wobei die Aufnahmefläche (11) mit der Arbeitsebene (2) bündig ist, wenn sich der Aufnahmeschieber (8) in einer ausgefahrenen Position befindet.

6. Maschine (1) zur additiven Fertigung nach Anspruch 4, wobei sich der Aufnahmeschieber (8) in Bezug auf die Arbeitsebene (2) in einer Nut (10) bewegt, die sich in der horizontalen Querrichtung erstreckt.

7. Verfahren zur additiven Fertigung eines Teils durch vollständiges oder teilweises selektives Schmelzen eines Pulvers, bei welchem die Maschine (1) nach einem der vorhergehenden Ansprüche eingesetzt wird, wobei das Verfahren die folgenden Schritte umfasst:
- Bestimmen der Pulvermenge, die in jedem Punkt der Trajektorie des Injektors (9) in Bezug auf den Aufnahmeschieber (8) in der horizontalen Querrichtung zu verteilen ist;
- Bewegen des Aufnahmeschiebers (8) aus einer zurückgezogenen Position in eine ausgefahrene Position;
- Regulieren der Pulvermenge, die von dem Injektor (9) in jedem Punkt der Trajektorie des Injektors (9) in Bezug auf den Aufnahmeschieber (8) verteilt wird;
- Ausbreiten des Pulvers auf der Arbeitsebene (2) mittels der Ausbreitungsvorrichtung (6).

8. Verfahren zur additiven Fertigung nach Anspruch 7, bei welchem die Maschine (1) nach Anspruch 6 eingesetzt wird und welches nach dem Schritt des Ausbreitens des Pulvers auf der Arbeitsebene (2) die folgenden Schritte umfasst:
- Sammeln des überschüssigen Pulvers, welches nicht ausgebreitet worden ist;
- Aufnehmen des überschüssigen Pulvers in einer Nut (10);
- Entfernen des überschüssigen Pulvers.

## Claims

1. Machine (**1**) for the additive manufacture of a part by complete or partial selective melting of a powder, comprising:
- a horizontal working plane (**2**) intended to receive a powder layer;
- at least one device (**6**) for spreading the said powder layer over the working plane (**2**), which is movable with respect to the working plane (**2**) along a trajectory over the working plane (**2**) comprising at least one component parallel to a longitudinal horizontal direction;
- at least one system (**7**) for deposition of powder on the working plane (**2**) comprising at least one slide (**8**) for receiving powder and at least one powder injector (**9**); the receiving slide (**8**) being movable in translation, with respect to the working plane (**2**), along at least one transverse horizontal direction, between a retracted position in which the receiving slide (**8**) extends outside the trajectory of the device (**6**) for spreading over the working plane (**2**) and a deployed position in which the receiving slide (**8**) extends at least in part into the trajectory of the device (**6**) for spreading over the working plane (**2**); the injector (**9**) being positioned above the receiving slide (**8**), so as to dispense powder over the receiving slide (**8**) which is moving between a retracted position and a deployed position.

2. Additive manufacturing machine (**1**) according to Claim 1, in which the deposition system (**7**) is removable on the machine (**1**).

3. Additive manufacturing machine (**1**) according to Claim 1 or Claim 2, comprising at least two powder deposition systems (**7**).

4. Additive manufacturing machine (**1**) according to any one of the preceding claims, comprising a system for regulating the amount of powder dispensed by the injector (**9**) at any point of the trajectory of the injector (**9**), with respect to the receiving slide (**8**).

5. Additive manufacturing machine (**1**) according to any one of the preceding claims, in which the receiving slide (**8**) comprises a receiving surface (**11**) intended to receive the powder from the injector (**9**), the receiving surface (**11**) being flush with the working plane (**2**) when the receiving slide (**8**) is in a deployed position.

6. Additive manufacturing machine (**1**) according to Claim 4, in which the receiving slide (**8**) is moved with respect to the working plane (**2**) in a groove (**10**) extending along the transverse horizontal direction.

7. Process for the additive manufacture of a part by complete or partial selective melting of a powder, employing the machine (**1**) according to any one of the preceding claims, the said process comprising the following stages:
- determining the amount of powder to be dispensed at any point of the trajectory of the injector (**9**), with respect to the receiving slide (**8**), along the transverse horizontal direction;
- moving the receiving slide (**8**) from a retracted position into a deployed position;
- regulating the amount of powder dispensed by the injector (**9**) at any point of the trajectory of the injector (**9**), with respect to the receiving slide (**8**);
- spreading the powder over the working plane (**2**) by means of the spreading device (**6**).

8. Additive manufacturing process according to Claim 7, employing the machine (**1**) according to Claim 6, comprising the following stages, after the stage of spreading the powder over the working plane (**2**):
- collecting the excess powder which has not been spread;
- receiving the excess powder in a groove (**10**);
- discharging the excess powder.
